# EUROPEAN PATENT SPECIFICATION

(11) **EP 3 434 441 B1**
(45) Date of publication and mention of the grant of the patent: **08.09.2021**
(21) Application number: 17770461.6
(22) Date of filing: 27.03.2017
(51) Int. Cl.: B29C 45/66, B22D 17/26

(54) **INJECTION MOLDING MACHINE**
SPRITZGIESSMASCHINE
MACHINE DE MOULAGE PAR INJECTION

(30) Priority: 25.03.2016 JP 2016062412
(43) Date of publication of application: 30.01.2019
(73) Proprietor: Sumitomo Heavy Industries, Ltd., Tokyo 141-6025 (JP)
(72) Inventor: SAKAI, Kiminori, Chiba-shi Chiba 263-0001 (JP)
(74) Representative: Louis Pöhlau Lohrentz
(86) International application number: PCT/JP2017/012488
(87) International publication number: WO 2017/164422

(56) References cited:
- WO-A1-2016/133149
- CN-B- 102 632 594
- JP-A- 2003 089 133
- JP-A- 2010 105 361
- JP-A- 2012 121 218
- JP-A- 2015 089 651
- JP-A- 2015 150 693
- JP-A- 2016 034 752
- JP-A- 2016 049 636
- US-A1- 2008 078 261
- US-A1- 2012 288 584

## Description

### Technical Field

The present invention relates to an injection molding machine.

### Background Art

A mold clamping unit of an injection molding machine described in PTL 1 includes a stationary platen to which a stationary mold is attached, a movable platen to which a movable mold is attached, a toggle support which is provided on a side opposite to the stationary platen based on the movable platen, and a toggle mechanism which moves the movable platen. The movable platen includes a distortion preventing portion which prevents occurrence of distortion on a mold attachment surface at a location corresponding to each supporting point of a side edge of the movable platen between a supporting point of a toggle arm of the toggle mechanism and the mold attachment surface. US 2012/0288584 A1 discloses a toggle type mold clamping device. US 2008/0078261 A1 discloses a mold clamping mechanism of an injection molding machine. CN 102632594 B discloses a mold clamping device for a molding machine. JP 2010-105361 A discloses a molding machine with a toggle mechanism.

### Citation List

### Patent Literature

[PTL 1] Japanese Unexamined Patent Application Publication No. 9-337309

### Summary of Invention

### Technical Problem

The toggle support includes a toggle support body portion which includes a load receiving portion receiving a load from a tie bar at a corner portion and a link pin attachment portion to which a link pin of the toggle mechanism is attached. When a mold is clamped, a force in an opposite direction acts on the toggle support body portion and a link pin attachment portion, and thus, the toggle support is deformed. This deformation is released when the mold is opened.

Deformation of the toggle support is repeated, and thus, a phenomenon referred to as fretting occurs. The fretting is a relative minute reciprocation of the link pin with respect to the link pin attachment portion. A reciprocating direction is an axial direction of the link pin. Accordingly, the link pin may wear.

The present invention is made in consideration of the above-described problems, and an object thereof is to provide an injection molding machine capable of suppressing wear of the link pin of the toggle mechanism.

### Solution to Problem

In order to achieve the above-described object, according to an aspect of the present invention, there is provided an injection molding machine according to claim 1.

### Advantageous Effects of Invention

According to the aspect of the present invention, an injection molding machine capable of suppressing wear of a link pin of a toggle mechanism.

### Brief Description of Drawings

FIG. 1 is a view showing a state when a mold opening of an injection molding machine according to an embodiment is completed.
FIG. 2 is a view showing a state when a mold of the injection molding machine according to the embodiment is clamped.
FIG. 3 is a view when a toggle support according to the embodiment is viewed from above.
FIG. 4 is a view when a toggle support according to a first modification example is viewed from behind.
FIG. 5 is a view when a toggle support according to a second modification example is viewed from above.
FIG. 6 is a view when a toggle support according to a third modification example is viewed from above.
FIGS. 7A and 7B are views showing a toggle support according to a fourth modification example.
FIGS. 8A and 8B are views showing a toggle support according to a fifth modification example.
FIGS. 9A and 9B are views showing a toggle support according to a sixth modification example.
FIGS. 10A and 10B are views showing a toggle support in a related art.

### Description of Embodiments

Hereinafter, embodiments will be described with reference to the drawings. The same or corresponding reference numerals are assigned to the same or corresponding constituent elements in each drawing, and descriptions thereof are omitted. In each drawing, an X direction, a Y direction, and a Z direction are directions perpendicular to each other. The X direction indicates mold opening and closing directions. In a case where a mold clamping unit is a horizontal type injection molding machine, the Z direction indicates an up-down direction and the X direction and the Y direction indicate a horizontal direction.

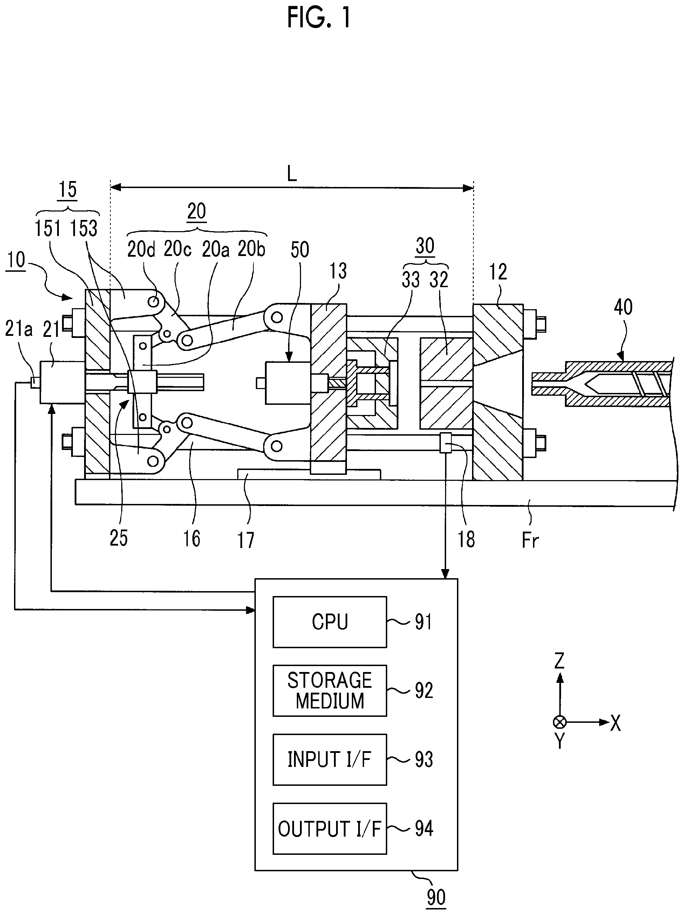

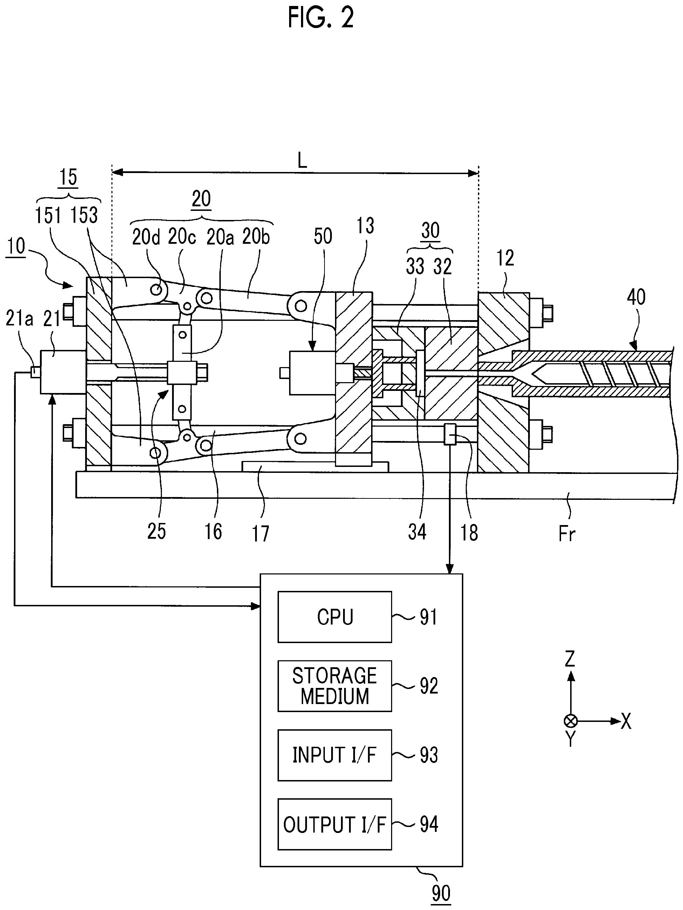

FIG. 1 is a view showing a state when a mold opening of an injection molding machine according to an embodiment is completed. FIG. 2 is a view showing a state when a mold of the injection molding machine according to the embodiment is clamped. As shown in FIGS. 1 and 2, the injection molding machine includes a frame Fr, a mold clamping unit 10, an injection unit 40, an ejector unit 50, and a controller 90. In the following descriptions, a movement direction (a right direction in FIGS. 1 and 2) of a movable platen 13 when a mold is closed is referred to a front side, and a movement direction (a left direction in FIGS. 1 and 2) of the movable platen 13 when the mold is opened is referred to a rear side.

The mold clamping unit 10 performs opening, clamping, and opening of the mold unit 30. The mold clamping unit 10 is a horizontal type mold clamping unit in which the mold opening and closing directions are the horizontal direction. The mold clamping unit 10 includes a stationary platen 12, a movable platen 13, a toggle support 15, a tie bar 16, a toggle mechanism 20, a mold clamping motor 21, and a motion conversion mechanism 25.

The stationary platen 12 is fixed to the frame Fr. A stationary mold 32 is attached to a surface of the stationary platen 12 facing the movable platen 13.

The movable platen 13 is movable along a guide (for example, a guide rail) 17 placed on the frame Fr and is movable forward or rearward with respect to the stationary platen 12. A movable mold 33 is attached to a surface of the movable platen 13 facing the stationary platen 12.

The movable platen 13 moves forward or rearward with respect to the stationary platen 12, and thus, mold closing, mold clamping, and, mold opening are performed. The mold unit 30 is configured of the stationary mold 32 and the movable mold 33.

The toggle support 15 is connected to the stationary platen 12 at an interval, and is placed on the frame Fr to be movable in mold opening and closing directions. In addition, the toggle support 15 may be movable along a guide which is placed on the frame Fr. The guide of the toggle support 15 may be also used as the guide 17 of the movable platen 13.

Moreover, in the present embodiment, the stationary platen 12 is fixed to the frame Fr, and the toggle support 15 is movable in the mold opening and closing directions with respect to the frame Fr. However, the toggle support 15 may be fixed to the frame Fr, and the stationary platen 12 may be movable in the mold opening and closing directions with respect to the frame Fr.

The stationary platen 12 and the toggle support 15 are connected to each other at an interval by the tie bar 16. A plurality of (for example, four) tie bars 16 may be used. The tie bars 16 are parallel in the mold opening and closing directions and extend according to a mold clamping force . A mold clamping force detector 18 is provided in at least one tie bar 16. The mold clamping force detector 18 detects strain of the tie bar 16 to detect the mold clamping force and sends a signal indicating a detection result to the controller 90.

In addition, the mold clamping force detector 18 is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 16.

The toggle mechanism 20 moves the movable platen 13 with respect to the stationary platen 12. The toggle mechanism 20 is disposed between the movable platen 13 and the toggle support 15. The toggle mechanism 20 is configured of a crosshead 20a, a pair of link groups, or the like. Each link group includes a plurality of links 20b and 20c which are bendably/strechably connected to each other by pins or the like. One link 20b is oscillatingly attached to the movable platen 13, and the other link 20c is oscillatingly attached to the toggle support 15. If the crosshead 20a moves forward or rearward, the plurality of links 20b and 20c are bent and stretched and the movable platen 13 moves forward or rearward with respect to the toggle support 15.

The mold clamping motor 21 is attached to the toggle support 15 and operates the toggle mechanism 20. The mold clamping motor 21 moves the crosshead 20a forward or rearward, and thus, the links 20b and 20c are bent and stretched, and the movable platen 13 moves forward or rearward.

The motion conversion mechanism 25 converts a rotary motion of the mold clamping motor 21 into a linear motion and transmits the linear motion to the crosshead 20a. For example, the motion conversion mechanism 25 is configured of a ball screw mechanism or the like.

The operation of the mold clamping unit 10 is controlled by the controller 90. As shown in FIG. 1 or 2, the controller 90 includes a Central Processing Unit (CPU) 91, a storage medium 92 such as a memory, an input interface 93, and an output interface 94. The controller 90 performs various controls by causing the CPU 91 to execute a program stored in the storage medium 92. In addition, the controller 90 receives a signal from the outside through the input interface 93 and transmits a signal to the outside through the output interface 94. The controller 90 controls a mold closing process, a mold clamping process, a mold opening process, or the like.

In the mold closing process, the mold clamping motor 21 is driven to move the crosshead 20a forward at a set speed. Accordingly, the movable platen 13 moves forward and the movable mold 33 comes into contact with the stationary mold 32. For example, a position or speed of the crosshead 20a is detected using an encoder 21a of the mold clamping motor 21 or the like. The encoder 21a detects the rotation of the mold clamping motor 21 and sends signals indicating the detection results to the controller 90.

In the mold clamping process, the mold clamping motor 21 is further driven to further move the crosshead 20a forward to a set position, and thus, a mold clamping force is generated. When the mold is clamped, a cavity space 34 is formed between the movable mold 33 and the stationary mold 32, and the cavity space 34 is filled with a liquid molding material by the injection unit 40. A filled molding material is solidified, and thus, a molding product is obtained. A plurality of cavity spaces 34 may be provided, and in this case, a plurality of molding products may be simultaneously obtained.

In the mold opening process, the mold clamping motor 21 is driven to move the crosshead 20a rearward at a set speed. Accordingly, the movable platen 13 moves rearward, and the movable mold 33 is separated from the stationary mold 32. Thereafter, the ejector unit 50 causes the molding product to protrude from the movable mold 33.

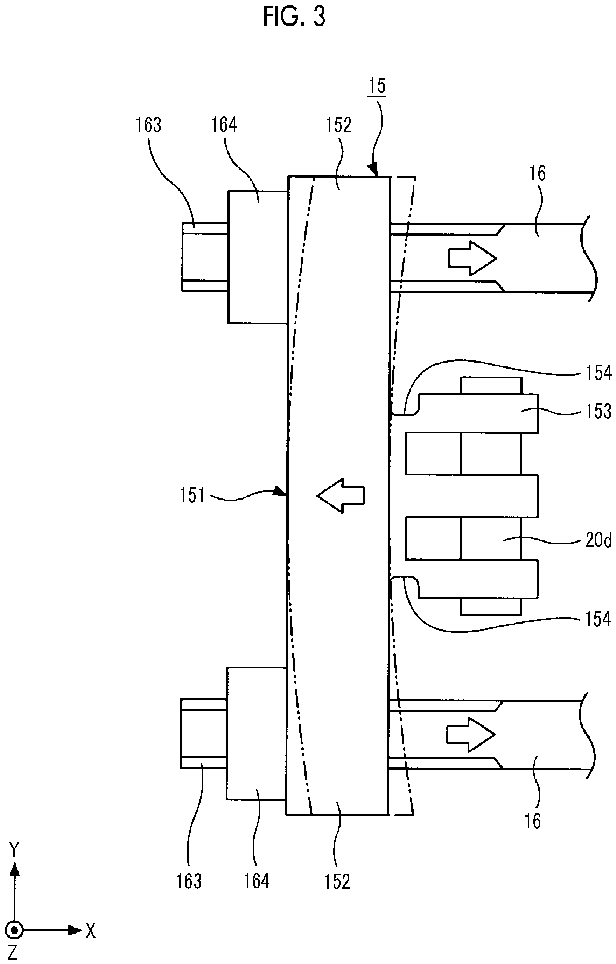

FIG. 3 is a view when a toggle support according to the embodiment is viewed from above. In FIG. 3, an arrow direction indicates a direction of a force acting on the toggle support 15 when the mold is clamped. In addition, in FIG. 3, deformation of a toggle support body portion 151 when the mold is clamped is exaggeratedly shown by a two-dot chain line.

As shown in FIGS. 1 to 3, the toggle support 15 includes the toggle support body portion 151 which receives a load from tie bars 16 and link pin attachment portions 153 to which link pins 20d of the toggle mechanism 20 are attached. The toggle support body portion 151 and the link pin attachment portions 153 are integrally formed with each other by casting or the like.

The toggle support body portion 151 is not particularly limited, and for example, is formed in an approximately rectangular plate shape. A ball screw shaft insertion hole through which a ball screw shaft of the motion conversion mechanism 25 is inserted is formed at a center portion of the toggle support body portion 151. In addition, a load receiving portion 152 which receives a load from the tie bars 16 when the mold is clamped is formed at a corner portion of the toggle support body portion 151. The load receiving portions 152 are provided at four corner portions of the toggle support body portion 151. A through-hole into which the tie bar 16 is inserted is formed in each load receiving portion 152.

A screw shaft 163 is formed on a rear end portion of each tie bar 16, and a screw nut 164 is screwed to the screw shaft 163. Each tie bar 16 is fixed to each load receiving portion 152 via the screw nut 164 or the like.

As shown in FIGS. 1 and 2, a pair of upper and lower link pin attachment portions 153 is provided on a surface of the toggle support body portion 151 facing the movable platen 13. Each link pin attachment portion 153 protrudes forward from a surface of the toggle support body portion 151 facing the movable platen 13. The link 20c of the toggle mechanism 20 is oscillatingly attached to a tip portion of each link pin attachment portion 153 via the link pin 20d. As shown in FIG. 3, an axial direction of the link pin 20d is the Y direction.

Meanwhile, as shown in FIG. 3, when viewed in the Z direction, the load receiving portions 152 are provided on both sides in the Y direction in a state where the link pin attachment portion 153 is interposed. Accordingly, as shown by an arrow in FIG. 3, when the mold is clamped, a force by which the toggle support body portion 151 is bent in a convex shape rearward is generated. This force is released when the mold is opened.

In the present embodiment, as shown in FIG. 3, when viewed in the Z direction, recessed portions 154 are provided between the link pin attachment portion 153 and the load receiving portions 152. Each of the recessed portions 154 forms a space for releasing the deformation of the toggle support body portion 151. Accordingly, it is possible to prevent the deformation of the toggle support body portion 151 from being transmitted to the link pin attachment portion 153, it is possible to suppress a relative minute reciprocation of the link pin 20d with respect to the link pin attachment portion 153, and it is possible to suppress wear of the link pin 20d.

For example, as shown in FIG. 3, each recessed portion 154 is provided on a base portion of the link pin attachment portion 153. The recessed portions 154 are provided on both sides of the link pin attachment portion 153 in the Y direction. In addition, the recessed portion 154 may be provided on one side of the link pin attachment portion 153 in the Y direction, or the number of the recessed portions 154 may be one.

Each of the recessed portions 154 may penetrate the base portion of the link pin attachment portion 153 in the Z direction. It is possible to further prevent the deformation of the toggle support body portion 151 from being transmitted to the link pin attachment portion 153. In addition, the recessed portion 154 may not penetrate the base portion of the link pin attachment portion 153 in the Z direction.

In addition, in FIG. 3, the recessed portion 154 is provided on the base portion of the link pin attachment portion 153. However, an installation position thereof is not particularly limited. The recessed portion 154 may be provided at a boundary portion between the link pin attachment portion 153 and the toggle support body portion 151, and may be provided on a surface of the toggle support body portion 151 facing the movable platen 13.

### First Modification Example

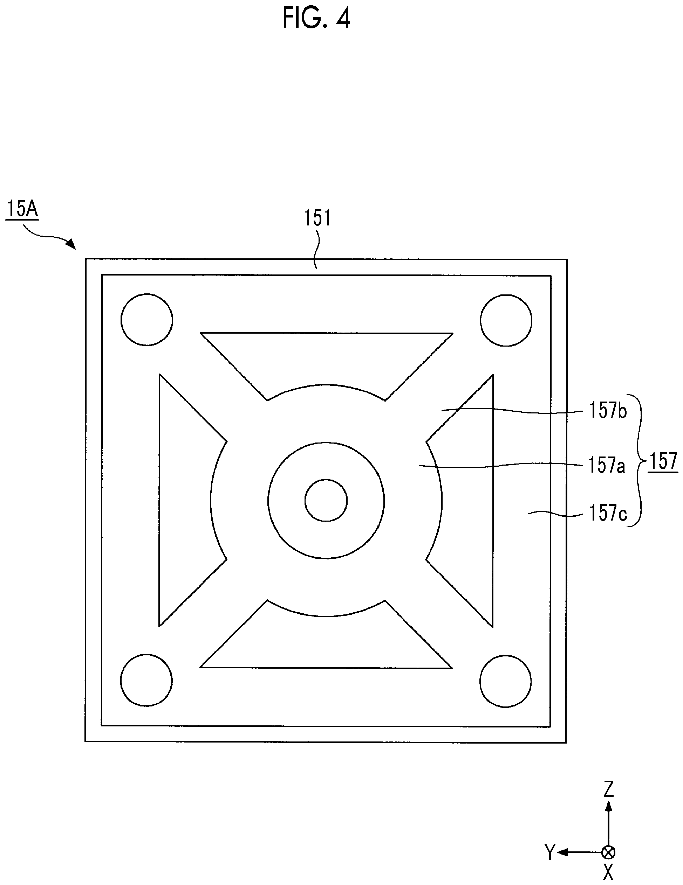

FIG. 4 is a view when a toggle support according to a first modification example is viewed from behind. A toggle support 15A includes a deformation suppression portion which suppresses deformation caused by clamping of the toggle support portion body 151, in addition to the toggle support body portion 151, the link pin attachment portions 153 (refer to FIGS. 1 to 3), and the recessed portion 154 (refer to FIG. 3).

For example, the deformation suppression portion includes a rib portion 157 which protrudes from the toggle support body portion 151 toward a side (for example, rear side) opposite to the link pin attachment portion 153. The rib portion 157 may be integrally formed with the toggle support body portion 151 by casting or the like.

The rib portion 157 is formed on only a portion of a rib formation surface (for example, rear surface) of the toggle support body portion 151, and thus, an increase in weight of the toggle support 15A can be suppressed. In addition, the rib portion 157 suppress the deformation caused by the clamping of the toggle support body portion 151. Accordingly, a loss in a force caused by the deformation of the toggle support body portion 151 decreases, and thus, transmission efficiency of the mold clamping force to the mold unit 30 can be improved.

For example, as shown in FIG. 4, the rib portion 157 includes an annular portion 157a which provided in a center portion of the toggle support body portion 151, a radial portion 157b which is provided from the center portion of the toggle support body portion 151 to corner portions thereof, and a linear portion 157c which is linearly formed to so as connect the corner portions of the toggle support body portion 151 to each other. The annular portion 157a, the radial portion 157b, and the linear portion 157c may be connected to each other.

The radial portion 157b is provided from the center portion of the toggle support body portion 151 to the four corner portions of the toggle support body portion 151. In addition, the number of arms of the radial portion 157b extending from the center portion of the toggle support body portion 151 to the corner portions of the toggle support body portion 151 is not limited to four.

The linear portion 157c is formed along an outer periphery of the toggle support body portion 151, and is linearly formed so as to connect the corner portions of the toggle support body portion 151 to each other. For example, the number of the linear portions 157c is four. In addition, the number of the linear portions 157c is not limited to four.

In addition, the rib portion 157 includes both the radial portion 157b and the linear portion 157c. However, the rib portion 157 may include only one. In addition, the rib portion 157 may not include the annular portion 157a.

### Second Modification Example

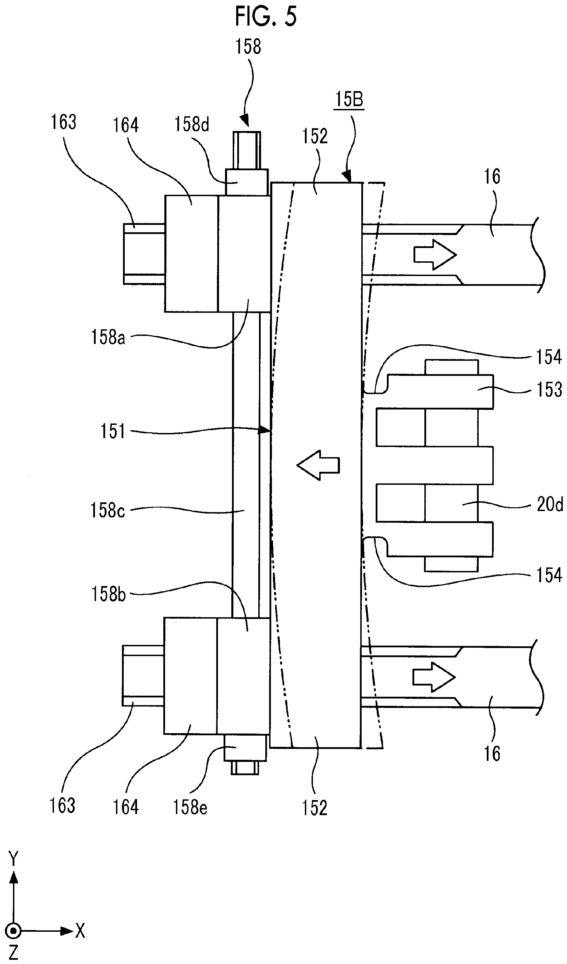

FIG. 5 is a view when a toggle support according to a second modification example is viewed from above. In FIG. 5, an arrow direction indicates a direction of a force acting on a toggle support 15B when the mold is clamped. In addition, in FIG. 5, deformation of the toggle support body portion 151 when the mold is clamped is exaggeratedly shown by a two-dot chain line.

The toggle support 15B includes a resistance generating portion 158 serving as a deformation suppression portion, in addition to the toggle support body portion 151, the link pin attachment portions 153, and the recessed portions 154.

In the resistance generating portion 158, both end portions 158a and 158b are fixed to the toggle support body portion 151, and an intermediate portion between both end portions 158a and 158b generates a resistance with respect to the deformation caused by the clamping of the toggle support body portion 151 without being fixed to the toggle support body portion 151.

For example, the intermediate portion is configured of a rod 158c. The rod 158c is fixed to both end portions 158a and 158b of the resistance generating portion 158 via nuts 158d and 158e screwed to the rod 158c. The rod 158c generates a resistance with respect to the deformation caused by the clamping of the toggle support body portion 151 by an elastic restoring force, and suppress the deformation caused by the clamping of the toggle support body portion 151.

The resistance generating portion 158 is provided in only a portion of the rear surface of the toggle support body portion 151, and an increase in weight of the toggle support 15B can be suppressed. In addition, the resistance generating portion 158 suppresses the deformation caused by the clamping of the toggle support body portion 151. Accordingly, a loss in a force caused by the deformation of the toggle support body portion 151 decreases, and thus, transmission efficiency of the mold clamping force to the mold unit 30 can be improved.

Meanwhile, the rod 158c extends in an axial direction by the deformation caused by the clamping of the toggle support body portion 151. In this case, a compressive stress may be applied to the rod 158c in advance before the clamping is performed such that an excessive tensile stress is not applied to the rod 158. Accordingly, it is possible to prevent the rod 158c from being ruptured by the tensile stress . The compressive stress applied to the rod 158c in advance can be adjusted by fastening forces of the nuts 158d and 158e.

As shown in FIG. 5, the resistance generating portion 158 is linearly provided to connect the corner portions of the toggle support body portion 151 to each other along the outer periphery of the toggle support body portion 151. For example, the number of the rods 158c is four. In addition, the number of the rods 158c is not limited to four.

Moreover, in the present modification example, the rod 158c is linearly provided to connect the corner portions of the toggle support body portion 151 to each other. However, the rod 158c may be radially provided from the center portion of the toggle support body portion 151 to the corner portions of the toggle support body portion 151, or may be formed in both shapes .

In a case where the rod 158c is radially provided, the annular portion 157a shown in FIG. 4 may be provided at the center portion of the toggle support body portion 151, or one end of the rod 158c may be fixed to the annular portion 157a. In this way, both the resistance generating portion 158 and the rib portion 157 shown in FIG. 4 may be used.

Instead of the rod 158c, or in addition to the rod 158c, a spring may be used, and the configuration of the intermediate portion is not particularly limited.

### Third Modification Example

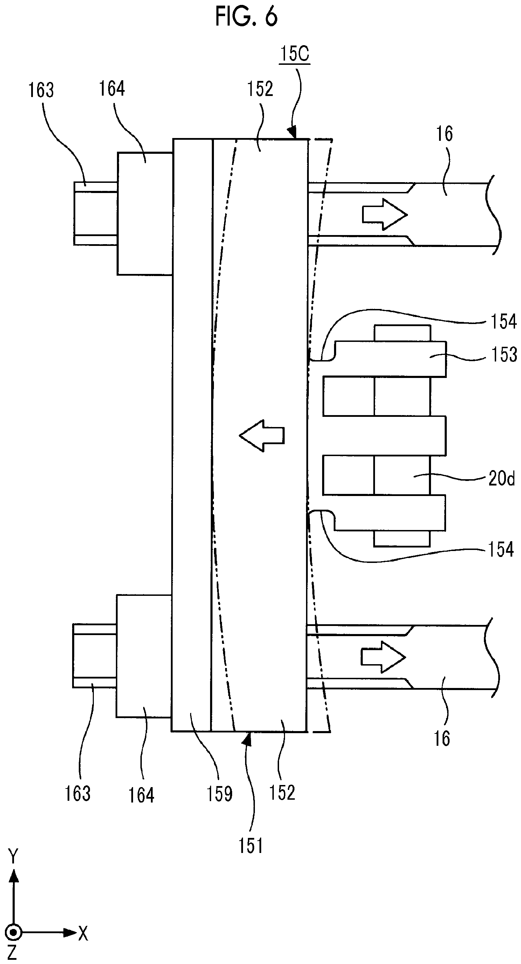

FIG. 6 is a view when a toggle support according to a third modification example is viewed from above. In FIG. 6, an arrow direction indicates a direction of a force acting on a toggle support 15C when the mold is clamped. In addition, in FIG. 6, deformation of the toggle support body portion 151 when the mold is clamped is exaggeratedly shown by a two-dot chain line.

The toggle support 15C includes a reinforcement portion 159 serving as a deformation suppression portion, in addition to the toggle support body portion 151, the link pin attachment portion 153, and the recessed portion 154.

The reinforcement portion 159 is formed of a material having a young' modulus higher than that of the toggle support body portion 151. The reinforcement portion 159 is formed of a material different from that of the toggle support body portion 151, and thus, the reinforcement portion 159 is fixed to the toggle support body portion 151 by a bolt, welding, or the like.

The reinforcement portion 159 suppresses the deformation caused by the clamping of the toggle support body portion 151. Accordingly, a loss in a force caused by the deformation of the toggle support body portion 151 decreases, and thus, transmission efficiency of the mold clamping force to the mold unit 30 can be improved. In addition, compared to a case where the reinforcement portion 159 and the toggle support body portion 151 are formed of the same material as each other, the reinforcement portion 159 is formed of a material having a young's modulus higher than that of the toggle support body portion 151, and thus, a thickness of the reinforcement portion 159 can be thinned, and thus, an increase in weight of the toggle support 15C can be suppressed.

In FIG. 6, the reinforcement portion 159 is formed in a plate shape. However, similar to the rib portion 157, the reinforcement portion 159 may be radially provided from the center portion of the toggle support body portion 151 to the corner portions of the toggle support body portion 151, or may be linearly provided so as to connect the corner portions of the toggle support body portion 151.

In addition, the reinforcement portion 159 may be used along with the rib portion 157 shown in FIG. 4, or may be fixed to the rib portion 157 by a bolt, welding, or the like. The deformation suppression portion may be configured of a plurality of combinations of the rib portion 157, the resistance generating portion 158, and the reinforcement portion 159.

### Fourth Modification Example

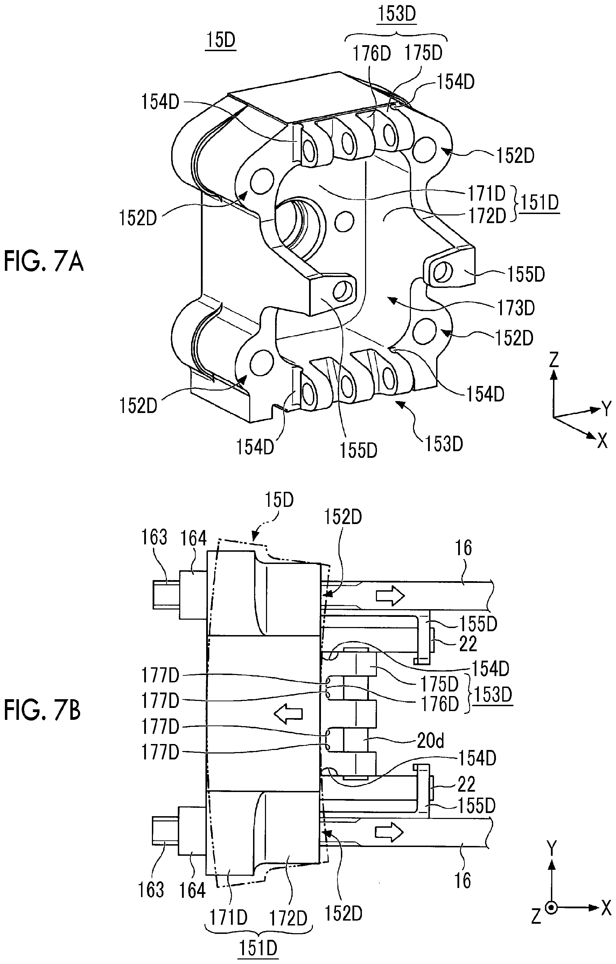

FIGS. 7A and 7B are views showing a toggle support according to a fourth modification example. FIG. 7A is a perspective view showing the toggle support according to the fourth modification example. FIG. 7B is a view when the toggle support according to the fourth modification example is viewed from above. In FIG. 7B, an arrow direction indicates a direction of a force acting on a toggle support 15D when the mold is clamped. In addition, in FIG. 7B, deformation of a toggle support body portion 151D when the mold is clamped is exaggeratedly shown by a two-dot chain line.

The toggle support 15D of the present modification example includes a toggle support body portion 151D which receives a load from the tie bars 16, link pin attachment portions 153D to which link pins 20d of the toggle mechanism 20 (refer to FIGS. 1 and 2) are attached, and toggle support arm portions 155D which hold front end portions of guide rods 22 guiding the crossheads 20a in the front-rear direction.

The toggle support body portion 151D includes a plate-shaped portion 171D which is formed in an approximately rectangular shape when viewed in the X direction and a tubular portion 172D which protrudes in the X direction from an outer peripheral edge portion of the plate-shaped portion 171D. The plate-shaped portion 171D includes a through-hole, into which a ball screw shaft of the motion conversion mechanism 25 is inserted, at a center portion thereof. The tubular portion 172D is formed in a rectangular frame shape when viewed in the X direction, and a space 173D in which the crossheads 20a move is formed inside the tubular portion 172D.

A pair of toggle support arm portions 155D is provided at an interval in the Y direction at a center portion in the Z direction of a surface (front surface) of the toggle support body portion 151D (more specifically, the tubular portion 172D) facing the movable platen 13. The pair of toggle support arm portion 155D protrudes in one direction (front side) in the mold opening and closing directions from the tubular portion 172D, bents inward to each other in the Y direction in the way, and holds the front end portions of the pair of the guide rods 22 by tip portions of the toggle support arm portions 155D. For example, each guide rod 22 is formed in a columnar shape and extends in the X direction.

The toggle support body portion 151D includes a load receiving portion 152D, which receives a load from the tie bar 16 when the mold is clamped, at each of four corner portions. Each load receiving portion 152D is formed in a tubular shape and includes a through-hole into which the tie bar 16 is inserted. The through-hole is formed to penetrate the tubular portion 172D and the plate-shaped portion 171D in the X direction. The load receiving portion 152D is configured by a corner portion of the tubular portion 172D and a corner portion of the plate-shaped portion 171D.

When the mold is clamped, each load receiving portion 152D may receive a load from each tie bar 16 via the screw nut 164. A screw shaft 163 is formed on a rear end portion of the tie bar 16, and the screw nut 164 is screwed to the screw shaft 163. The screw nut 164 may be attached to the load receiving portion 152D in a rotatable manner and a movable forward or rearward manner. The screw nuts 164 rotate, and thus, an interval L (refer to FIGS. 1 and 2) between the toggle support body portions 151D and the stationary platen 12 can be adjusted according to a change in a space of the mold unit 30. This adjustment may be referred to as a mold space adjustment.

Each link pin attachment portion 153D includes attachment plates 175D which protrude in one direction (front side) in the mold opening and closing directions from the tubular portion 172D. A plurality of the attachment plates 175D are provided at intervals in the Y direction and are perpendicular to the Y direction.

Base portions of the attachment plates 175D are connected to each other by a connection plate 176D. When viewed in the Z direction, rounded fillet portions 177D may be formed at corner portions between the attachment plates 175D and the connection plate 176D.

Meanwhile, a through-hole which penetrates each attachment plate 175D in the Y direction is formed on a tip portion of each attachment plate 175D. The link pins 20d are inserted into the through-holes, and thus, the link 20c is oscillatingly attached to the link pin attachment portion 153D via the link pin 20d. An axial direction of the link pin 20d is the Y direction.

A pair of link pin attachment portions 153D is provided at an interval in the Z direction at a center portion in the Y direction of a surface (front surface) of the toggle support body portion 151D (more specifically, the tubular portion 172D) facing the movable platen 13.

Meanwhile, as shown in FIG. 7B, when viewed in the Z direction, the load receiving portions 152D are provided on both sides in the Y direction in a state where each link pin attachment portion 153D is interposed therebetween. As shown by an arrow in FIG. 7B, when the mold is clamped, the link pin attachment portion 153D is pressed rearward and the load receiving portion 152D is pulled forward. As a result, the toggle support body portion 151D is bent rearward in a convex shape. This deformation is released when the mold is opened.

In the toggle support 15D of the present modification example, when viewed in the Z direction, recessed portions 154D are provided between the link pin attachment portions 153D and the load receiving portions 152D. For example, each recessed portion 154D is provided on a base portion of the link pin attachment portion 153D which protrudes forward from the tubular portion 172D.

For example, the recessed portions 154D are formed on both end surfaces of the base portion of each link pin attachment portion 153D in the Y direction. That is, in the plurality of (for example, three) attachment plates 175D which are provided at intervals in the Y direction, the recessed portions 154D are formed on outer surfaces in the Y direction of the base portions of two attachment plates 175D provided on both ends in the Y direction.

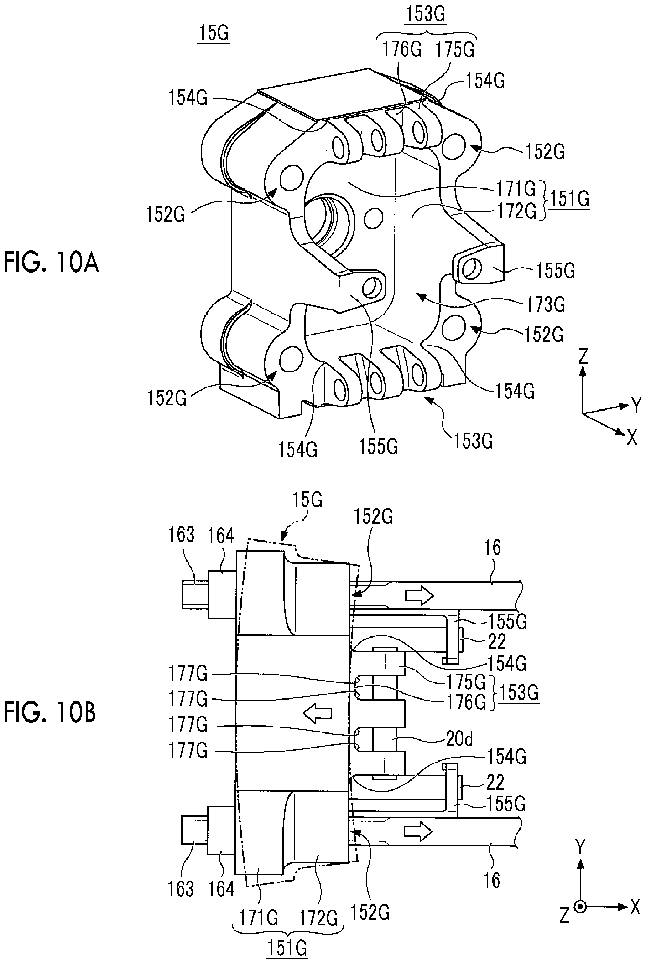

FIGS. 10A and 10B are views showing a toggle support in the related art. FIG. 10A is a perspective view showing the toggle support in the related art. FIG. 10B is a view when the toggle support in the related art is viewed from above. In FIG. 10B, an arrow direction indicates a direction of a force acting on a toggle support 15G when the mold is clamped. In addition, in FIG. 10B, deformation of a toggle support body portion 151G when the mold is clamped is exaggeratedly shown by a two-dot chain line.

In the toggle support 15G of the related art shown in FIG. 10B, when viewed in the Z direction, fillet portions 177G are formed at corner portions between attachment plates 175G and a connection plate 176G. In addition, fillet portions 154G are formed on outer side surfaces in the Y direction of the base portion of the two attachment plates 175G provided on both ends in the Y direction. That is, when viewed in the Z direction, the fillet portions 154G are formed on both end surfaces of the base portion of the link pin attachment portion 153D in the Y direction.

Meanwhile, as shown in FIG. 10B, when viewed in the Z direction, load receiving portions 152G are provided on both sides in the Y direction in a state where each link pin attachment portion 153G is interposed therebetween. As shown by an arrow in FIG. 10B, when the mold is clamped, the link pin attachment portion 153G is pressed rearward and the load receiving portion 152G is pulled forward. As a result, the toggle support body portion 151G is bent rearward in a convex shape. This deformation is released when the mold is opened.

In the toggle support 15G of the related art, when viewed in the Z direction, fillet portions 154G are provided on both end surfaces of the base portion of the link pin attachment portion 153D in the Y direction. Accordingly, deformation of the toggle support body portion 151G easily spreads to the base portion of the link pin attachment portion 153G on both sides of the link pin attachment portion 153G in the Y direction. For example, according to a curvature of the toggle support body portion 151G, two attachment plates 175G on both ends in the Y direction is bent toward the attachment plate 175G side positioned at the center in the Y direction. As a result, the link pin 20d tends to make a relatively minute reciprocation with respect to the link pin attachment portion 153G, and the link pin 20d easily wears.

Meanwhile, in the toggle support 15D of the present modification example shown in FIGS. 7A and 7B, when viewed in the Z direction, the recessed portions 154D are provided on end surfaces of the base portion of each link pin attachment portion 153D in the Y direction. Each of the recessed portions 154D forms a space for releasing the deformation of the toggle support body portion 151D, and thus, the deformation of the toggle support body portion 151D is prevented from being transmitted to each link pin attachment portion 153D. Accordingly, it is possible to suppress the relative minute reciprocation of the link pin 20d with respect to the link pin attachment portion 153D, and it is possible to suppress wear of the link pin 20d.

As shown in FIG. 7A, each recessed portion 154D extends from one end in the Z direction on the end surface of the base portion of the link pin attachment portion 153D in the Y direction to the other end in the Z direction. Accordingly, it is possible to further prevent the deformation of the toggle support body portion 151D from being transmitted to the link pin attachment portion 153D. As a result, it is possible to further suppress the relative minute reciprocation of the link pin 20d with respect to the link pin attachment portion 153D, and it is possible to further suppress wear of the link pin 20d.

The recessed portion 154D may be formed on one end surface of the base portion of each link pin attachment portion 153D in the Y direction. However, as shown in FIG. 7B, the recessed portions 154D may be formed on both end surfaces of the base portion of each link pin attachment portion 153D in the Y direction. Accordingly, it is possible to further prevent the deformation of the toggle support body portion 151D from being transmitted to the link pin attachment portion 153D. As a result, it is possible to further suppress the relative minute reciprocation of the link pin 20d with respect to the link pin attachment portion 153D, and it is possible to further suppress wear of the link pin 20d.

### Fifth Modification Example

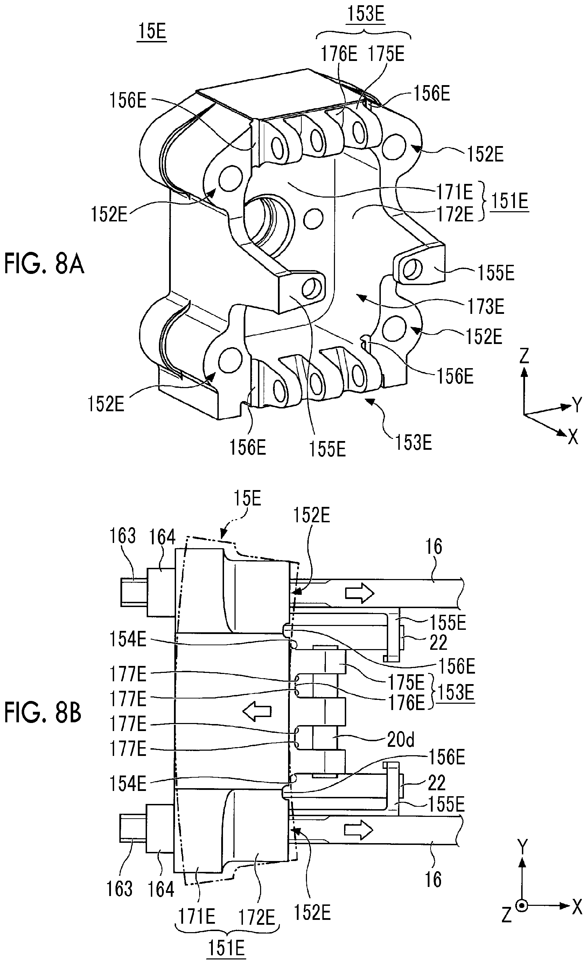

FIGS. 8A and 8B are views showing a toggle support according to a fifth modification example. FIG. 8A is a perspective view showing the toggle support according to the fifth modification example. FIG. 8B is a view when the toggle support according to the fifth modification example is viewed from above. In FIG. 8B, an arrow direction indicates a direction of a force acting on a toggle support 15E when the mold is clamped. In addition, in FIG. 8B, deformation of a toggle support body portion 151E when the mold is clamped is exaggeratedly shown by a two-dot chain line.

The toggle support 15E of the present modification example includes a toggle support body portion 151E which receives a load from the tie bars 16, link pin attachment portions 153E to which link pins 20d of the toggle mechanism 20 (refer to FIGS. 1 and 2) are attached, and toggle support arm portions 155E which hold front end portions of guide rods 22 guiding the crossheads 20a in the front-rear direction.

The toggle support body portion 151E includes a plate-shaped portion 171E which is formed in an approximately rectangular shape when viewed in the X direction and a tubular portion 172E which protrudes in the X direction from an outer peripheral edge portion of the plate-shaped portion 171E. The plate-shaped portion 171E includes a through-hole, into which the ball screw shaft of the motion conversion mechanism 25 is inserted, at a center portion thereof. The tubular portion 172E is formed in a rectangular frame shape when viewed in the X direction, and a space 173D in which the crossheads 20a move is formed inside the tubular portion 17eE.

A pair of toggle support arm portions 155E is provided at an interval in the Y direction at a center portion in the Z direction of a surface (front surface) of the toggle support body portion 151E (more specifically, the tubular portion 172E) facing the movable platen 13. The pair of toggle support arm portion 155E protrudes in one direction (front side) in the mold opening and closing directions from the tubular portion 172E, bents inward to each other in the Y direction in the way, and holds the front end portions of the pair of the guide rods 22 by tip portions of the toggle support arm portions 155E. For example, each guide rod 22 is formed in a columnar shape and extends in the X direction.

The toggle support body portion 151E includes a load receiving portion 152E, which receives a load from the tie bar 16 when the mold is clamped, at each of four corner portions. Each load receiving portion 152E is formed in a tubular shape and includes a through-hole into which the tie bar 16 is inserted. The through-hole is formed to penetrate the tubular portion 172E and the plate-shaped portion 171E in the X direction. The load receiving portion 152E is configured by a corner portion of the tubular portion 172E and a corner portion of the plate-shaped portion 171E.

When the mold is clamped, each load receiving portion 152E may receive a load from each tie bar 16 via the screw nut 164. The screw shaft 163 is formed on the rear end portion of the tie bar 16, and the screw nut 164 is screwed to the screw shaft 163. The screw nut 164 may be attached to the load receiving portion 152E in a rotatable manner and a movable forward or rearward manner. The screw nuts 164 rotate, and thus, the interval L (refer to FIGS. 1 and 2) between the toggle support body portions 151E and the stationary platen 12 can be adjusted according to the change in the space of the mold unit 30. This adjustment may be referred to as the mold space adjustment.

Each link pin attachment portion 153E includes attachment plates 175E which protrude in one direction (front side) in the mold opening and closing directions from the tubular portion 172E. A plurality of the attachment plates 175E are provided at intervals in the Y direction and are perpendicular to the Y direction.

Base portions of the attachment plates 175E are connected to each other by a connection plate 176E. When viewed in the Z direction, rounded fillet portions 177E may be formed at corner portions between the attachment plates 175E and the connection plate 176E
- In addition, fillet portions 154E may be formed on outer surfaces in the Y direction of the base portions of the two attachment plates 175G provided on both ends in the Y direction.

Meanwhile, a through-hole which penetrates each attachment plate 175E in the Y direction is formed on a tip portion of each attachment plate 175E. The link pins 20d are inserted into the through-holes, and thus, the link 20c is oscillatingly attached to the link pin attachment portion 153E via the link pin 20d. The axial direction of the link pin 20d is the Y direction.

A pair of link pin attachment portions 153E is provided at an interval in the Z direction at a center portion in the Y direction of a surface (front surface) of the toggle support body portion 151E (more specifically, the tubular portion 172E) facing the movable platen 13.

Meanwhile, as shown in FIG. 8B, when viewed in the Z direction, the load receiving portions 152E are provided on both sides in the Y direction in a state where each link pin attachment portion 153E is interposed therebetween. As shown by an arrow in FIG. 8B, when the mold is clamped, the link pin attachment portion 153E is pressed rearward and the load receiving portion 152E is pulled forward. As a result, the toggle support body portion 151E is bent rearward in a convex shape. This deformation is released when the mold is opened.

In the toggle support 15E of the present modification example, when viewed in the Z direction, recessed portions 156E are provided between the link pin attachment portions 153E and the load receiving portions 152E. For example, each recessed portion 156E is provided the front surface of the tubular portion 172E between the link pin attachment portion 153E and the load receiving portion 152E.

For example, as shown in FIG. 8A, the recessed portions 156E extend in the Z direction from an outer peripheral edge of a front surface of the tubular portion 172E formed in an approximately rectangular shape when viewed in the X direction to an inner peripheral edge thereof. Each recessed portion 156E divides the front surface of the tubular portion 172E into the link pin attachment portion 153E side and the load receiving portion 152E side.

Meanwhile, in the toggle support 15G of the related art shown in FIGS. 10A and 10B, when viewed in the Z direction, the recessed portion does not exist on the front surface of the tubular portion 172G between each link pin attachment portion 153G and each load receiving portion 152G, and a flat surface is formed.

Accordingly, in the related art, deformation of the toggle support body portion 151G easily spreads to the base portion of the link pin attachment portion 153G on both sides of the link pin attachment portion 153G in the Y direction. For example, according to the curvature of the toggle support body portion 151G, the two attachment plates 175G on both ends in the Y direction is bent toward the attachment plate 175G side positioned at the center in the Y direction. As a result, the link pin 20d tends to make a relatively minute reciprocation with respect to the link pin attachment portion 153G, and the link pin 20d easily wears.

Meanwhile, in the toggle support 15E of the present modification example shown in FIGS. 8A and 8B, when viewed in the Z direction, each recessed portion 156E is provided the front surface of the tubular portion 172E between the link pin attachment portion 153E and the load receiving portion 152E. Each of the recessed portions 156E forms a space for releasing the deformation of the toggle support body portion 151E, and thus, the deformation of the toggle support body portion 151E is prevented from being transmitted to each link pin attachment portion 153E. Accordingly, it is possible to suppress the relative minute reciprocation of the link pin 20d with respect to the link pin attachment portion 153E, and it is possible to suppress wear of the link pin 20d.

As shown in FIG. 8A, the recessed portion 156E extends in the Z direction from the outer peripheral edge to the inner peripheral edge on the front surface of the tubular portion 172E and divides the front surface of the tubular portion 172E. Accordingly, the deformation of the toggle support body portion 151E is further prevented from being transmitted to each link pin attachment portion 153E. As a result, it is possible to further suppress the relative minute reciprocation of the link pin 20d with respect to the link pin attachment portion 153E, and it is possible to further suppress wear of the link pin 20d.

The recessed portion 156E may be formed on one side of the link pin attachment portion 153E in the Y direction. However, as shown in FIG. 8B, the recessed portions 156E may be formed on both sides of the link pin attachment portion 153E in the Y direction. Accordingly, the deformation of the toggle support body portion 151E is further prevented from being transmitted to each link pin attachment portion 153E. As a result, it is possible to further suppress the relative minute reciprocation of the link pin 20d with respect to the link pin attachment portion 153E, and it is possible to further suppress wear of the link pin 20d.

In addition, the recessed portion 156E of the present modification example may be used together with the recessed portion 154D of the fourth modification example. That is, in the present modification example, the fillet portions 154E are formed on both end surfaces of the base portion of the link pin attachment portion 153E in the Y direction. However, instead, the recessed portions 154D of the fourth modification example may be formed.

### Sixth Modification Example

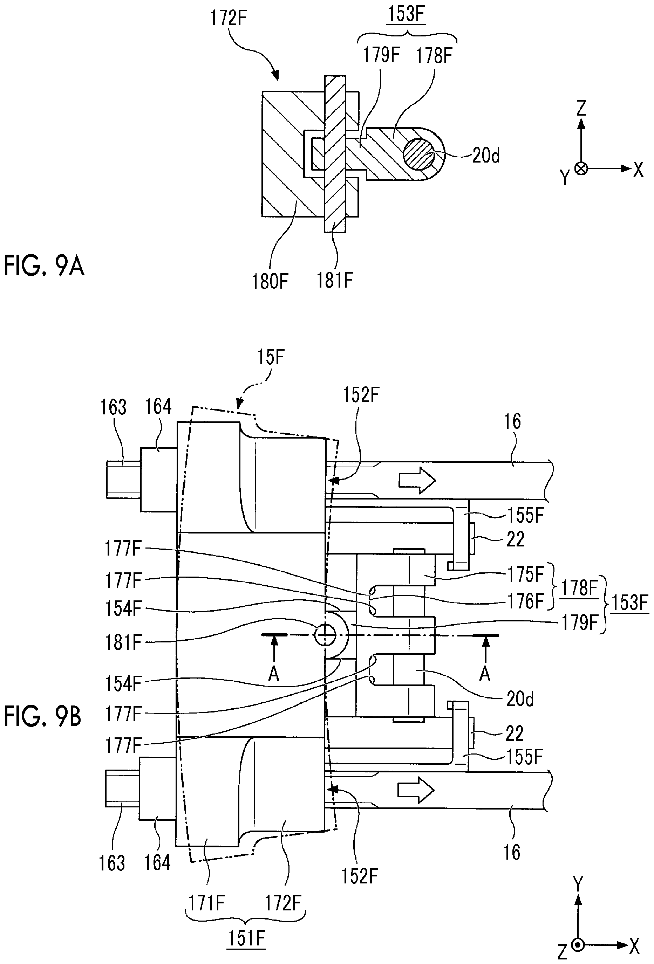

FIGS. 9A and 9B are views showing a toggle support according to a sixth modification example. FIG. 9A is a sectional view of a toggle support according to the sixth modification example and is a sectional view taken along line A-A of FIG. 9B. FIG. 9B is a view when the toggle support according to the sixth modification example is viewed from above. In FIG. 9B, an arrow direction indicates a direction of a force acting on a toggle support 15F when the mold is clamped. In addition, in FIG. 9B, deformation of a toggle support body portion 151F when the mold is clamped is exaggeratedly shown by a two-dot chain line.

The toggle support 15F of the present modification example includes a toggle support body portion 151F which receives a load from the tie bars 16, link pin attachment portions 153F to which link pins 20d of the toggle mechanism 20 (refer to FIGS. 1 and 2) are attached, and toggle support arm portions 155F which hold front end portions of guide rods 22 guiding the crossheads 20a in the front-rear direction.

The toggle support body portion 151F includes a plate-shaped portion 171F which is formed in an approximately rectangular shape when viewed in the X direction and a tubular portion 172F which protrudes in the X direction from an outer peripheral edge portion of the plate-shaped portion 171F. The plate-shaped portion 171F includes a through-hole, into which a ball screw shaft of the motion conversion mechanism 25 is inserted, at a center portion thereof. The tubular portion 172F is formed in a rectangular frame shape when viewed in the X direction, and a space 173D in which the crossheads 20a move is formed inside the tubular portion 172D.

A pair of toggle support arm portions 155F is provided at an interval in the Y direction at a center portion in the Z direction of a surface (front surface) of the toggle support body portion 151F (more specifically, the tubular portion 172F) facing the movable platen 13. The pair of toggle support arm portion 155F protrudes in one direction (front side) in the mold opening and closing directions from the tubular portion 172F, bents inward to each other in the Y direction in the way, and holds the front end portions of the pair of the guide rods 22 by tip portions of the toggle support arm portions 155F. For example, each guide rod 22 is formed in a columnar shape and extends in the X direction.

The toggle support body portion 151F includes a load receiving portion 152F, which receives a load from the tie bar 16 when the mold is clamped, at each of four corner portions. Each load receiving portion 152F is formed in a tubular shape and includes a through-hole into which the tie bar 16 is inserted. The through-hole is formed to penetrate the tubular portion 172F and the plate-shaped portion 171F in the X direction. The load receiving portion 152F is configured by a corner portion of the tubular portion 172F and a corner portion of the plate-shaped portion 171F.

When the mold is clamped, each load receiving portion 152F may receive a load from each tie bar 16 via the screw nut 164. The screw shaft 163 is formed on a rear end portion of the tie bar 16, and the screw nut 164 is screwed to the screw shaft 163. The screw nut 164 may be attached to the load receiving portion 152F in a rotatable manner and a movable forward or rearward manner. The screw nuts 164 rotate, and thus, the interval L (refer to FIGS. 1 and 2) between the toggle support body portions 151F and the stationary platen 12 can be adjusted according to a change in the space of the mold unit 30. This adjustment may be referred to as the mold space adjustment.

Each link pin attachment portion 153F is formed to be separated from the toggle support body portion 151F and is connected to the toggle support body portion 151F via a rotary shaft 181F. An axial direction of the rotary shaft 181F is the Z direction. Each link pin attachment portion 153F is rotatable with respect to the toggle support body portion 151F which supports the rotary shaft 181F.

Each link pin attachment portion 153F includes attachment plates 175F which protrude in one direction (front side) in the mold opening and closing directions from the tubular portion 172F. A plurality of the attachment plates 175F are provided at intervals in the Y direction and are perpendicular to the Y direction.

Base portions of the attachment plates 175F are connected to each other by a connection plate 176F. When viewed in the Z direction, rounded fillet portions 177F may be formed at corner portions between the attachment plates 175F and the connection plate 176F.

Meanwhile, a through-hole which penetrates each attachment plate 175F in the Y direction is formed on a tip portion of each attachment plate 175F. The link pins 20d are inserted into the through-holes, and thus, the link 20c is oscillatingly attached to the link pin attachment portion 153F via the link pin 20d. An axial direction of the link pin 20d is the Y direction.

As shown in FIG. 9B, comb-shaped portions 178F having a comb-tooth shape in the Z direction are configured by the attachment plates 175F and the connection plates 176F. As shown in FIG. 9A, a rotary shaft support portion 179F protrudes from a rear surface of each comb-shaped portion 178F.

The rotary shaft support portion 179F supports a center portion of the rotary shaft 181F in the Z direction. A through-hole into which the rotary shaft 181F is inserted is formed in the rotary shaft support portion 179F. As described above, the axial direction of the rotary shaft 181F is the Z direction.

Meanwhile, both end portions of the rotary shaft 181F in the Z direction are supported by the tubular portion 172F. As shown in FIG. 9A, the tubular portion 172F supports both end portions of the rotary shaft 181F in the Z direction, and thus, includes a fork portion 180F which is bifurcated in the Y direction when viewed in the Y direction. Through-holes into which the rotary shaft 181F is inserted are formed in a tip portion of the fork portion 180F.

A pair of link pin attachment portions 153F is provided at an interval in the Z direction at a center portion in the Y direction of a surface (front surface) of the toggle support body portion 151F (more specifically, the tubular portion 172F) facing the movable platen 13.

Meanwhile, as shown in FIG. 9B, when viewed in the Z direction, the load receiving portions 152F are provided on both sides in the Y direction in a state where each link pin attachment portion 153D is interposed therebetween. As shown by an arrow in FIG. 9B, when the mold is clamped, the link pin attachment portion 153D is pressed rearward and the load receiving portion 152F is pulled forward. As a result, the toggle support body portion 151F is bent rearward in a convex shape. This deformation is released when the mold is opened.

In the toggle support 15F of the present modification example, when viewed in the Z direction, recessed portions 154F are provided between the link pin attachment portions 153F and the load receiving portions 152F. For example, each recessed portion 154F is provided on a base portion of the link pin attachment portion 153F which protrudes forward from the tubular portion 172F.

For example, a dimension of the rotary shaft support portion 179F in the Y direction is smaller than a dimension of the comb-shaped portion 178F in the Y direction, and the recessed portions 154F are formed on both end surfaces of the base portion of the link pin attachment portion 153 in the Y direction. Each of the recessed portions 154F forms a space for releasing the deformation of the toggle support body portion 151F, and thus, the deformation of the toggle support body portion 151F is prevented from being transmitted to each link pin attachment portion 153F. Accordingly, it is possible to suppress the relative minute reciprocation of the link pin 20d with respect to the link pin attachment portion 153F, and it is possible to suppress wear of the link pin 20d.

Each recessed portion 154F extends from one end in the Z direction on the end surface of the base portion of the link pin attachment portion 153F in the Y direction to the other end in the Z direction. Accordingly, it is possible to further prevent the deformation of the toggle support body portion 151F from being transmitted to the link pin attachment portion 153F. As a result, it is possible to further suppress the relative minute reciprocation of the link pin 20d with respect to the link pin attachment portion 153F, and it is possible to further suppress wear of the link pin 20d.

The recessed portion 154F may be formed on one end surface of the base portion of each link pin attachment portion 153F in the Y direction. However, as shown in FIG. 9B, the recessed portions 154D may be formed on both end surfaces of the base portion of each link pin attachment portion 153F in the Y direction. Accordingly, it is possible to further prevent the deformation of the toggle support body portion 151F from being transmitted to the link pin attachment portion 153F. As a result, it is possible to further suppress the relative minute reciprocation of the link pin 20d with respect to the link pin attachment portion 153F, and it is possible to further suppress wear of the link pin 20d.

In addition, in the toggle support 15F of the present modification example, each link pin attachment portion 153F is rotatable about the rotary shaft 181F with respect to the toggle support body portion 151F. The axial direction of the rotary shaft 181F is the Z direction, and when viewed in the Z direction, a moment caused by the deformation of the toggle support body portion 151F can be prevented from being transmitted to the rotary shaft 181F. As a result, it is possible to further suppress the relative minute reciprocation of the link pin 20d with respect to the link pin attachment portion 153F, and it is possible to further suppress wear of the link pin 20d.

In addition, in the toggle support 15F of the present modification example, a recessed portion similar to the recessed portion 156E of the fifth modification example may be formed. That is, when viewed in the Z direction, the recessed portion similar to the recessed portion 156E of the fifth modification example may be formed on the front surface of the tubular portion 172F between the link pin attachment portion 153F and the load receiving portion 152F.

Hereinbefore, the embodiments or the like of the injection molding machine are described. However, the present invention is not limited to the above-described embodiments or the like, and various modifications and improvements are possible within a scope of the gist of the present invention described in claims.

In the above-described embodiments, a horizontal mold clamping unit in which the mold opening and closing directions are the horizontal direction is used as the mold clamping unit 10. However, the mold clamping unit 10, a vertical mold clamping unit in which the mold opening and closing directions are the up-down direction may be used. The vertical mold clamping unit includes a lower platen, an upper platen, a toggle support, a toggle mechanism, a tie bar, or the like. Either the lower platen or the upper platen is used as the stationary platen, and the other is used as the movable platen. A lower mold is attached to the lower platen, and an upper mold is attached to the upper platen. The mold unit is configured of the lower mold and the upper mold. The lower mold may be attached to the lower platen via a rotary table. The toggle support is disposed below the lower platen. The toggle mechanism is disposed between the toggle support and the lower platen. The tie bar is parallel in a vertical direction, penetrates the lower platen, and connects the upper platen and the toggle support to each other.

### Reference Signs List

- 10:: mold clamping unit
- 12:: stationary platen
- 13:: movable platen
- 15:: toggle support
- 151:: toggle support body portion
- 152:: load receiving portion
- 153:: link pin attachment portion
- 154:: recessed portion
- 157:: rib portion
- 158:: resistance generating portion
- 159:: reinforcement portion
- 16:: tie bar
- 30:: mold unit
- 40:: injection unit
- 50:: ejector unit

## Claims

1. An injection molding machine comprising:
a toggle support (15) which includes a toggle support body portion (151) including load receiving portions (152), configured to receive a load from a tie bar (16), provided at corner portions of the toggle support body portion (151), and a link pin attachment portion (153) to which a link pin (20d) of a toggle mechanism is attached,
wherein the toggle support (15) further includes a deformation suppression portion configured to suppress deformation caused by clamping of the toggle support body portion (151),
wherein when viewed in a direction perpendicular to mold opening and closing directions and perpendicular to an axial direction of the link pin (20d), the load receiving portions (152) are provided on both sides with the link pin attachment portion (153) interposed therebetween, **characterized in that** a recessed portion (154) is provided between the link pin attachment portion (153) and the load receiving portion (152).

2. The injection molding machine according to claim 1,
wherein the recessed portion (154) is provided on a base portion of the link pin attachment portion (153) which protrudes in one direction in mold opening and closing directions from the toggle support body portion (151).

3. The injection molding machine according to claim 1 or 2,
wherein the deformation suppression portion is radially provided from a center portion of the toggle support body portion (151) to the corner portion of the toggle support body portion (151) .

4. The injection molding machine according to any of the claims 1 to 3,
wherein the deformation suppression portion is linearly provided to connect the corner portions of the toggle support body portion (151) to each other.

5. The injection molding machine according to any one of claims 1 to 4,
wherein the deformation suppression portion includes a rib portion (157) which protrudes from the toggle support body portion (151) toward a side opposite to the link pin attachment portion (153).

6. The injection molding machine according to any one of claims 1 to 5,
wherein the deformation suppression portion includes a resistance generating portion (158) which has both end portions (158a, 158b) fixed to the toggle support body portion (151) and an intermediate portion, between both end portions (158a, 158b), which is not fixed to the toggle support body portion (151) and configured to generate a resistance with respect to the deformation.

7. The injection molding machine according to any one of claims 1 to 6,
wherein the deformation suppression portion includes a reinforcement portion (159) which is formed of a material having a young' modulus higher than that of the toggle support body portion (151).

## Patentansprüche

1. Spritzgießmaschine, umfassend:
einen Kniehebelträger (15), der einen Kniehebelträgerkörperabschnitt (151) umfasst, welcher Lastaufnahmeabschnitte (152), die konfiguriert sind, eine Last von einer Säule (16) aufzunehmen, die an Eckabschnitten des Kniehebelträgerkörperabschnitts (151) vorgesehen sind, und einen Bindegliedstiftbefestigungsabschnitt (153), an dem ein Bindegliedstift (20d) eines Kniehebelmechanismus befestigt ist, umfasst;
wobei der Kniehebelträger (15) ferner einen Verformungsunterdrückungsabschnitt umfasst, der konfiguriert ist, durch Klemmen des Kniehebelträgerkörperabschnitts (151) verursachte Verformung zu unterdrücken,
wobei die Lastaufnahmeabschnitte (152), wenn in einer Richtung senkrecht zu Formöffnungs- und Schließrichtungen und senkrecht zu einer Axialrichtung des Bindegliedstifts (20d) betrachtet, auf beiden Seiten mit dem zwischen ihnen angeordneten Bindegliedstiftbefestigungsabschnitt (153) vorgesehen sind, **dadurch gekennzeichnet, dass** ein ausgesparter Abschnitt (154) zwischen dem Bindegliedstiftbefestigungsabschnitt (153) und dem Lastaufnahmeabschnitt (152) vorgesehen ist.

2. Spritzgießmaschine nach Anspruch 1,
wobei der ausgesparte Abschnitt (154) an einem Basisabschnitt des Bindegliedstiftbefestigungsabschnitts (153) vorgesehen ist, der in einer Richtung in Formöffnungs- und Schließrichtungen von dem Kniehebelträgerkörperabschnitt (151) vorsteht.

3. Spritzgießmaschine nach Anspruch 1 oder 2,
wobei der Verformungsunterdrückungsabschnitt radial von einem Mittelabschnitt des Kniehebelträgerkörperabschnitts (151) zu dem Eckabschnitt des Kniehebelträgerkörperabschnitts (151) vorgesehen ist.

4. Spritzgießmaschine nach einem der Ansprüche 1 bis 3,
wobei der Verformungsunterdrückungsabschnitt linear vorgesehen ist, um die Eckabschnitte des Kniehebelträgerkörperabschnitts (151) miteinander zu verbinden.

5. Spritzgießmaschine nach einem der Ansprüche 1 bis 4,
wobei der Verformungsunterdrückungsabschnitt einen Rippenabschnitt (157) umfasst, der von dem Kniehebelträgerkörperabschnitt (151) hin zu einer Seite gegenüberliegend dem Bindegliedstiftbefestigungsabschnitt (153) vorsteht.

6. Spritzgießmaschine nach einem der Ansprüche 1 bis 5,
wobei der Verformungsunterdrückungsabschnitt einen Widerstand-erzeugenden Abschnitt (158), von dem beide Endabschnitte (158a, 158b) an dem Kniehebelträgerkörperabschnitt (151) befestigt sind, und einen Zwischenabschnitt, zwischen beiden Endabschnitten (158a, 158b), der nicht an dem Kniehebelträgerkörperabschnitt (151) befestigt ist und konfiguriert ist, einen Widerstand in Bezug auf die Verformung zu erzeugen, aufweist.

7. Spritzgießmaschine nach einem der Ansprüche 1 bis 6,
wobei der Verformungsunterdrückungsabschnitt einen Verstärkungsabschnitt (159) umfasst, der aus einem Material gebildet ist, dessen Elastizitätsmodul höher ist als jener des Kniehebelträgerkörperabschnitts (151).

## Revendications

1. Une machine de moulage par injection comprenant :
un support à bascule (15) qui inclut une partie formant corps de support à bascule (151) incluant des parties de réception de charge (152), conçues pour recevoir une charge depuis une barre de liaison (16), prévues au niveau de parties formant coins de la partie formant corps de support à bascule (151), et une partie de fixation de goupille de liaison (153) à laquelle est fixée une goupille de liaison (20d) d'un mécanisme à bascule,
dans laquelle le support à bascule (15) inclut en outre une partie de suppression de déformation conçue pour supprimer une déformation causée par serrage de la partie formant corps de support à bascule (151),
dans laquelle lorsqu'elles sont observées dans une direction perpendiculaire à des directions d'ouverture et de fermeture de moule et perpendiculaire à une direction axiale de la goupille de liaison (20d), les parties de réception de charge (152) sont prévues sur les deux côtés avec la partie de fixation de goupille de liaison (153) intercalée entre elles, **caractérisée en ce qu'**une partie évidée (154) est prévue entre la partie de fixation de goupille de liaison (153) et la partie de réception de charge (152).

2. La machine de moulage par injection selon la revendication 1,
dans laquelle la partie évidée (154) est prévue sur une partie de base de la partie de fixation de goupille de liaison (153) qui fait saillie dans une seule direction dans des directions d'ouverture et de fermeture de moule depuis la partie formant corps de support à bascule (151).

3. La machine de moulage par injection selon la revendication 1 ou 2,
dans laquelle la partie de suppression de déformation est prévue radialement depuis une partie centrale de la partie formant corps de support à bascule (151) à la partie formant coin de la partie formant corps de support à bascule (151).

4. La machine de moulage par injection selon l'une quelconque des revendications 1 à 3,
dans laquelle la partie de suppression de déformation est prévue linéairement pour relier les parties formant coins de la partie formant corps de support à bascule (151) les unes aux autres.

5. La machine de moulage par injection selon l'une quelconque des revendications 1 à 4,
dans laquelle la partie de suppression de déformation inclut une partie formant nervure (157) qui fait saillie depuis la partie formant corps de support à bascule (151) vers un côté opposé à la partie de fixation de goupille de liaison (153).

6. La machine de moulage par injection selon l'une quelconque des revendications 1 à 5,
dans laquelle la partie de suppression de déformation inclut une partie de génération de résistance (158) dont les deux parties d'extrémité (158a, 158b) sont fixées à la partie formant corps de support à bascule (151) et une partie intermédiaire, entre les deux parties d'extrémité (158a, 158b), qui n'est pas fixée à la partie formant corps de support à bascule (151) et conçue pour générer une résistance par rapport à la déformation.

7. La machine de moulage par injection selon l'une quelconque des revendications 1 à 6,
dans laquelle la partie de suppression de déformation inclut une partie de renforcement (159) qui est formée d'un matériau présentant un module de Young plus élevé que celui de la partie formant corps de support à bascule (151).
